Europäisches Patentamt

European Patent Office

Office européen des brevets

(11) Publication number: **0 084 763**
**B1**

(12) **EUROPEAN PATENT SPECIFICATION**

(45) Date of publication of patent specification: **09.12.87**

(21) Application number: **82830264.6**

(22) Date of filing: **21.10.82**

(51) Int. Cl.⁴: **B 65 G 47/32**

(54) **Apparatus for conveying biscuits, and confectionery products in general, towards a wrapping machine.**

(30) Priority: **19.01.82 IT 1918082**

(43) Date of publication of application:
**03.08.83 Bulletin 83/31**

(45) Publication of the grant of the patent:
**09.12.87 Bulletin 87/50**

(84) Designated Contracting States:
**DE FR GB NL**

(56) References cited:
**EP-A-0 082 120**
**EP-A-0 084 297**
**DE-A-2 422 164**
**DE-A-2 514 792**
**GB-A- 908 395**
**GB-A-1 367 543**
**US-A-2 603 339**
**US-A-3 753 484**

(73) Proprietor: **CAVANNA S.p.A.**
**104, Via Matteotti**
**I-28077 Prato Sesia Novara (IT)**

(72) Inventor: **Francioni, Renzo**
**54, Via A. Volta**
**Grignasco Novara (IT)**

(74) Representative: **Perani, Aurelio et al**
**c/o JACOBACCI-CASETTA & PERANI S.p.A 7,**
**Via Visconti di Modrone**
**I-20122 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to apparatus for conveying biscuits, and confectionery products in general, towards a wrapping machine.

These biscuits may be of various types, both with regard to the consistency of the mixture, which may be quite crumbly, and to the possible presence of a filling and/or a coating, for example a chocolate coating. In some cases, they may also have granular coatings of, for example, almonds sprinkled on a coating of caramel or jam.

Now, there is a need to feed such biscuits to a wrapping machine where the biscuits are individually wrapped in cellophane. Such packages can then be handled easily in the further stages of the production cycle up to consumption.

According to the presently known technology, the feeding of the biscuits to a wrapping machine is carried out by an apparatus comprising

— a cellular conveyor belt with equally spaced partitions defining cells for individual products;

— at least one conveyor extending at right angle to the cellular conveyor belt; and

— at least one endless chain conveyor provided with projecting pusher members, the operative run of which extends above a respective conveyor in the direction of the cellular belt for displacing the products from the conveyor into respective cells of the cellular belt.

An example of such known apparatus is shown and described in DE—A—2 422 164.

The feeding of the biscuits to a wrapping machine has, until now, encountered the contrasting needs of achieving a high rate of conveyance of the biscuits, as is clearly required in the large-scale production of widely consumed products, and at the same time minimising the percentage of biscuits damaged in conveyance; this is not only to avoid obvious wastage but also because damaged biscuits result in laborious operations for their removal.

These disadvantages are all the more clearly great as the biscuits are valued for the preparation of the mixture, the filling, and/or the coating.

The problem behind the present invention is that of devising an apparatus of the type specified which has such structural and functional characteristics as to satisfy the requirement explained in the preamble while overcoming the disadvantages mentioned.

This problem is solved by an apparatus as recited in the appended claim 1.

Advantageously, the cellular conveyor belt is formed of three belts located side-by-side, the central belt having a run which is prolongated relative to the lateral belts and extends into the wrapping machine.

One embodiment of the invention is described below, by way of example, with reference to the single appended drawing which is a schematic perspective view of apparatus according to the invention.

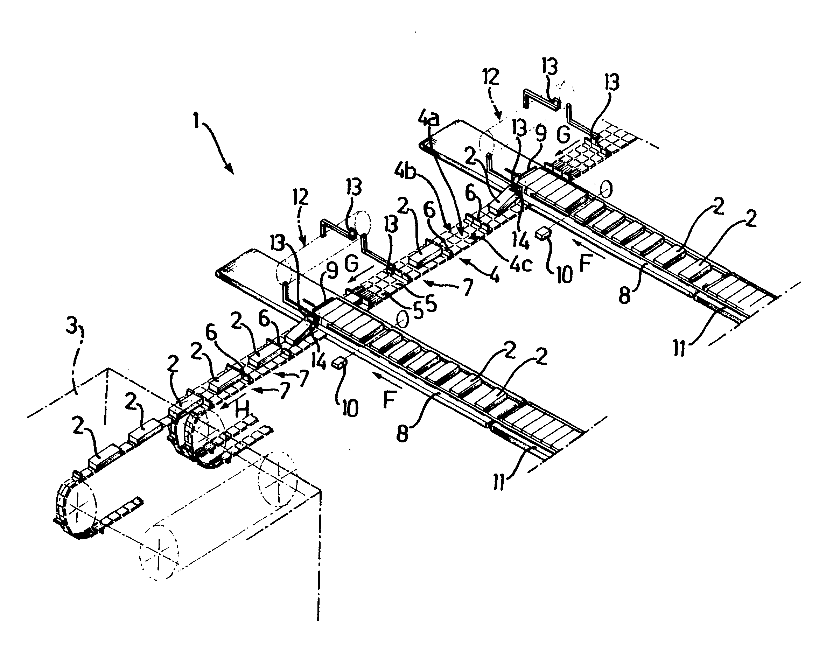

With reference to the appended drawing, there is generally indicated 1 apparatus for conveying biscuits each indicated 2, towards an entirely conventional type of wrapping machine, schematically indicated 3, in which the biscuits are individually wrapped in cellophane.

The machine 1 includes a conveyor belt 4 formed by a succession of metal links 5 carrying partitions, each indicated 6, which are equally spaced along the belt 4 to form cells, each indicated 7, defined by adjacent partitions and intended to receive a respective biscuit 2.

The distance between the partitions is fixed in relation to the length of the biscuit to be wrapped in cellophane, and to the spacing between the biscuits which is necessary for the heat-sealing of the cellophane between the biscuits in the wrapping machine 3.

The belt 4 is formed by three belts located side-by-side and, in particular, by a central belt 4a and two lateral belts 4b, 4c, the central belt 4a having a longer run than the lateral belts 4b, 4c and extending into the wrapping machine 3.

The apparatus 1 according to the invention includes two continuous conveyor belts, both indicated 8, which are supplied with biscuits 2, each extending above the belt 4 at right angles thereto.

The belt 4 and the two belts 8 are supported by a support frame of an entirely conventional type which is not shown in order not to overburden the drawing.

A stop 9 is fixed to the frame and is located above each belt 8 in correspondence with the belt 4 to stop the biscuits 2 on the belt 8.

On a section between the stop 9 and a photocell 10 supported by the frame, the discuits 2 are arranged in a continuous line on each belt 8, that is, touching each other, while on the remaining section the biscuits are generally spaced from each other.

Each belt 8 is provided with a respective continuous conveyor belt 11 located upstream thereof. Each belt 11 is supplied with biscuits from a respective production unit, such as a baking oven or a unit in which the biscuits are, for example, coated with chocolate, and in its turn supplies the respective belt 8. Each photocell 10 controls the speed of the respective belt 11 in an entirely conventional manner so that the section between the stop 9 and the photocell 10 is always filled with a continuous line of biscuits 2. All the belts 8, 11 are provided with guide strips for the biscuits along the belts themselves.

The apparatus 1 according to the present invention includes two chain conveyors 12 with projecting pusher members 13 the operative run of which extends above a respective continuous belt 8 in the direction of the belt 4.

Two eccentric strikers 14 are each located in correspondence with the end of the operative run of the pushers 13 of a respective conveyor 12, each striker 14 having a circular trajectory so as to strike from above each biscuit conveyed by the pushers 13.

The operation of the apparatus 1 according to the invention is described below.

As the biscuits on each belt 8, which advances in the direction of the arrow F, come to bear against the stop 9, they are displaced transversely one at a time by a pusher 13, which advances in the direction of the arrow G, until they leave the belt 8 laterally. From the belts 8, the biscuits fall onto the belt 4 which advances in the direction of the arrow H at substantially the same speed as the pushers 13. The two continuous chain conveyors 12 with the pushers 13 are driven in phase with the advance of the belt 4, so that the biscuits fall from the belts 8 exactly into respective alternate cells 7 of the belt 4.

The fall and, in particular, the detachment of each biscuit 2 from the pusher 13 which has displaced it are facilitated by the presence of the eccentric strikers 14 which, driven in phase with the pushers 13, strike each biscuit 2 from above at the moment the pusher 13 reaches the end of its operative run.

Each biscuit 2 is thus conveyed by the belt 4 towards the machine 3 and finally, from the central belt 4a, into the machine 3 where it is wrapped in cellophane.

It should be noted that, in the example illustrated, the apparatus 1 includes two continuous belts 8 with their respective chain conveyors 12 and associated members, but any apparatus in which there is any number of belts 8 with their respective conveyors 12 and associated members, for example three or more, falls within the scope of the invention.

In the apparatus according to the invention, each biscuit is subjected individually to the force necessary for its conveyance and, from the belt 8 to the machine 3, is transported positively, first by the pushers 13 and then in the cells 7.

This results in a minimum of damage to the biscuits and avoids the accumulation of crumbs and particles which may become detached from the biscuits and may be sticky.

From what has been described above, it is clear that, in the apparatus according to the invention, the cellular belt 4 may even have quite a high speed since it is fed by a plurality of continuous belts 8 and that consequently the pushers 13 may have an equally high speed without any faltering of the biscuits 2 at this stage during their fall onto the belt 4. By virtue of this high speed of the pushers 13, the time for which the biscuits 2 remain in contact with the stops 9 is rendered as short as possible, which is of advantage to their integrity.

By virtue of the apparatus according to the invention, there is thus achieved the important advantage of conveying biscuits towards a wrapping machine at a high rate, without damage to the biscuits.

## Claims

1. Apparatus (1) for conveying biscuit and confectionery products (2) towards a wrapping machine (3), comprising
— a cellular conveyor belt (4) with equally spaced partitions (6) defining cells (7) for individual products (2);
— at least one conveyor (8) extending at right angle to the cellular conveyor belt (4); and
— at least one endless chain conveyor (12) provided with projecting pusher members (13), the operative run of which extends above a respective conveyor (8) in the direction of the cellular belt (4) for displacing the products (2) from the conveyor (8) into respective cells (7) of the cellular belt (4),
characterized in that each conveyor (8) is an endless belt extending above the cellular conveyor belt (4) and in that the apparatus includes a respective eccentric striker (14) located in correspondence with the operative run of the pusher members (13) of each endless chain conveyor (12), each striker (14) having a circular trajectory to strike from above each product (2) conveyed by each pusher member.

2. Apparatus as claimed in Claim 1, in which the cellular conveyor belt (4) is formed of three belts (4a, 4b, 4c) located side-by-side, the central belt (4a) having a run which is prolonged relative to the lateral belts (4b, 4c) and extends into the wrapping machine (3).

## Patentansprüche

1. Vorrichtung (1) zum Transportieren von Keksen und Süßwaren (2) zu einer Verpackungsmaschine (3)
mit einem zellularen Förderband (4) mit in gleichen Abständen angeordneten Wandungselementen (6), die Zellen (7) für die einzelnen Produkte (2) bestimmen,
mit wenigstens einem rechtwinklig zu dem zellularen Förderband (4) vorlaufenden Förderer (8)
sowie mit wenigstens einem endlosen Kettenförderer (12) mit vorstehenden Stoßgliedern (13), deren Arbeitsweg oberhalb des zugeordneten Förderers (8) in Richtung des Zellen-Förderbands (4) verläuft und die zur Verbringung der Produkte (2) von dem Förderer (8) in entsprechende Zellen (7) des zellularen Förderbands (4) dienen,
dadurch gekennzeichnet,
daß jeder Förderer (8) von einem sich oberhalb des zellularen Förderbands (4) erstreckenden endlosen Band gebildet ist,
daß den jeweiligen Kettenförderern (12) zugeordnete exzentrische Mitnehmer (14) vorgesehen sind, die im Bereich des Arbeitswegs der Stoßglieder (13) der einzelnen endlosen Kettenförderer (12) angeordnet sind,
und daß die einzelnen Mitnehmer (14) eine kreisförmige Bewegungsbahn beschreiben, um die von den einzelnen Stoßgliedern geförderten Produkte (2) von oben mitzunehmen.

2. Vorrichtung nach Anspruch 1, bei dem das zellulare Förderband (4) aus drei seitlich nebeneinander angeordneten Förderbändern (4a, 4b, 4c) besteht, wobei das zentrale Förderband (4a) gegenüber den seitlichen Förderbändern (4b, 4c) einen längeren Laufweg besitzt und sich bis die Verpackungsmaschine (3) erstreckt.

**Revendications**

1. Appareil (1) pour le transport de biscuits et de produits de confiserie (2) vers une machine d'emballage (3), comprenant

— une courroie de transport cellulaire (4) avec des cloisons (6) uniformément espacées et définissant des cellules (7) pour des produits (2) individuels;

— au moins un convoyeur (8) s'étendant à angle droit par rapport à la courroie de transport cellulaire (4); et

— au moins un convoyeur (12) à chaîne sans fin, pourvu de poussoirs saillants (13) et dont le brin de travail s'étend au-dessus d'un convoyeur (8) correspondant, dans la direction de la courroie cellulaire (4), pour transférer les produits (2) du convoyeur (8) dans les cellules (7) respectives de la courroie cellulaire (4),

caractérisé en ce que chaque convoyeur (8) est une courroie sans fin s'étendant au-dessus de la courroie de transport cellulaire (4) et en ce que l'appareil comporte un batteur (14) excentré, disposé en correspondance avec le brin de travail des poussoirs (13), pour chaque convoyeur (12) à chaîne sans fin, chaque batteur (14) ayant un trajet circulaire et étant destiné à frapper d'en haut chaque produit (2) transporté par chaque poussoir.

2. Appareil selon la revendication 1, dans lequel la courroie de transport cellulaire (4) est constituée de trois courroies (*4a*, *4b*, *4c*) juxtaposées, la courroie centrale (4a) ayant un brin qui est prolongé par rapport aux courroies latérales (4b, 4c) et qui s'étend jusque dans la machine d'emballage (3).